# EUROPEAN PATENT SPECIFICATION

(11) **EP 2 906 331 B1**
(45) Date of publication and mention of the grant of the patent: **17.05.2017**
(21) Application number: 13774250.8
(22) Date of filing: 30.09.2013
(51) Int. Cl.: B01D 61/36

(54) **MEMBRANE DISTILLATION SYSTEM AND METHOD OF STARTING SUCH A SYSTEM**
MEMBRANDESTILLATIONSSYSTEM UND VERFAHREN ZUM STARTEN SOLCH EINES SYSTEMS
SYSTÈME DE DISTILLATION SUR MEMBRANE ET PROCÉDÉ DE MISE EN ROUTE DE CE SYSTÈME

(30) Priority: 11.10.2012 NL 2009615; 05.04.2013 NL 2010576
(43) Date of publication of application: 19.08.2015
(73) Proprietor: Aquaver B.V., 5215 MK 'S-Hertogenbosch (NL)
(72) Inventor: WEIJDEMA, Hein, NL-3047 AC Rotterdam (NL); WARDENIER, Peter, NL-3047 AC Rotterdam (NL); MAESSEN, Ralph, NL-3047 AC Rotterdam (NL)
(74) Representative: 2K Patentanwälte Blasberg Kewitz & Reichel
(86) International application number: PCT/NL2013/050695
(87) International publication number: WO 2014/058305

(56) References cited:
- WO-A1-2005/089914
- WO-A1-2007/054311
- DE-A1-102009 020 179
- US-A1- 2009 283 396

## Description

### Field of the invention

The invention relates to a membrane distillation system comprising a plurality of membrane distillation modules that are pressure-wise coupled in series, such that each subsequent membrane distillation module operates at a lower pressure than a preceding membrane distillation module, each of which membrane distillation modules comprises:
- A liquid channel with a fluid entry and a fluid exit and a membrane through which evaporated liquid may pass; and
- a vapor space adjacent to the liquid channel and separated therefrom through the membrane, through which evaporated liquid may pass into the vapor space, which vapor space further comprises a condensation wall and a distillate exit for a distillate generated by means of condensation of the evaporated liquid.

The invention further relates to a method of the use of such a membrane distillation system for water purification, for air conditioning and/or for other liquid purification applications, such as the removal of water from ethanol.

### Background of the invention

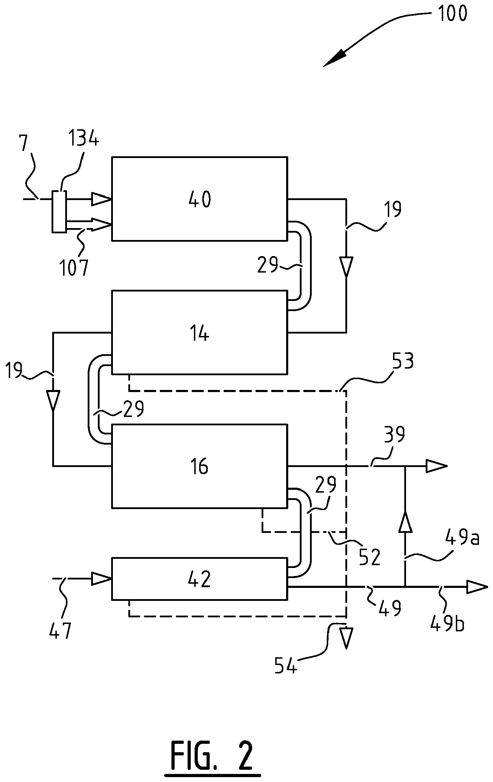

The use of membrane distillation for desalination of water has already been investigated in the 1980s. EP0094543A2 discloses a membrane distillation system as defined hereabove, and discloses a series of graphs in its Figures 11 to 18, in which the volume of distillate is shown as a function of temperature and underpressure. While the primary embodiment shows a single distillation module, it is clear from f.i. Fig. 2 that a plurality of membrane distillation modules may be put in series.

US2009/0283396A1 discloses a further membrane distillation system based on a membrane distillation module. The system comprises a single stage and does not use underpressure. The feed going into the membrane distillation module is first led through a fluidized bed heat exchanger unit, wherein the liquid feed is partially evaporated into vapour. The vapour is then separated from the liquid by means of the membrane.

Further elaborations of said basic principles disclosed in EP0094543A2 are known from WO-A 2005/089914, WO-A 2007/054311 and WO-A 2010/0127818. WO-A-2005/089914 discloses in its Fig. 2 an embodiment of a series coupling of several distillation modules. The first of said distillation modules mere generates vapour, which is used as a heat source in the second distillation module for the needed evaporation from the feed liquid, and then converted into distillate. The second distillation module again generates new vapour that is used as a heat source in the third distillation module and thus condensated into distillate. The vapour resulting from the third distillation module is condensated in a separate condenser module, particularly a cooler in the form of a heat exchanger. This process is also known as vacuum membrane distillation, which involves particularly a plurality of steps, in which the pressure is successively lowered, so that liquid can evaporate, while the temperature decreases.

In the embodiment of WO-A-2005/089914, a plurality of liquid channels and vapor spaces is put in parallel within one distillation module, so as to increase the effective surface area. This is moreover an effective design for heat exchange; a single vapour channel is present between two liquid channels, thus minimizing heat losses to the environment. If the liquid channel is designed to be narrow, the feed liquid can easily fill the liquid channel, leading to maximation of the effective surface area.

An effective implementation providing such narrow liquid channels hereof is disclosed in WO-A 2010/0127818, in the form of a wieldable and stackable frame, in which the required channels within one distillation module are defined. If desired, fluid and/or vapour connections between subsequent distillation modules may be implemented into the stack of frames. Each frame may be provided with foils chosen from a.o. hydrophobic membranes and condensation walls. Hence, a liquid channel is defined with a frame provided with a condensation wall foil on one side, and a hydrophobic membrane foil on the opposed side. As a result hereof, the system may have a membrane distillation module and a condenser that are integrated into one physical system. Under pressure channels are moreover implemented herein for ensuring the setting of the intended underpressure through the complete system.

WO-A 2007/054311 discloses furthermore an arrangement for controlling the underpressure in the series of distillation modules, and more particularly such that the full system runs at an underpressure. Thereto, an underpressure pipe system is shown extending to the vapour spaces of the membrane distillation modules, a condenser module as well as the preceding heat generator. Moreover, several underpressure control means in the form of U-tubes (typically siphons) are present, i.e. in the feed line, in the system's distillate exit and in the brine exit.

Moreover, a heat generator with a liquid recirculation system is proposed, rather than using the feed as the base for generating a hot vapour. A separate steam riser circuit is used, wherein steam acts as a medium for heat transfer. This steam is generated in a membrane distillation process and is led to the first membrane distillation module for condensation against a heat -transfer wall in a first membrane distillation module. The condensated steam is coupled back into a recirculation line of the steam riser circuit. After further heating, the recirculated water enters again the membrane distillation process for generating steam.

This steam-riser circuit with recirculated steam apparently is a solution to the technical problem of transferring sufficient heat to a low pressure feed. A major disadvantage of such steam riser circuit with recirculated steam is however the added system complexity and a loss of distillate. Part of the obtained distillate has to be fed back into the steam riser circuit, so as to keep its volume and flow rate constant. This distillate feed back reduces the yield.

### Summary of the invention

It is therefore an object of the invention to provide a membrane-distillation process with a higher efficiency than with a separate steam riser circuit, which is able to run at an underpressure so as to obtain appropriate yield.

It is a further object to provide a membrane distillation system without separate steam-riser circuit with steam recirculation and suitable for running at underpressure.

In accordance with a first aspect of the invention, a membrane distillation process according to claim 1 is provided. The membrane distillation process is carried out in a system comprising a plurality of modules. The method comprises the steps of:
- applying an underpressure to at least one of the modules of the system, which underpressure is forwarded to other modules through pressure communication;
- generating a vapour flow in a steam generator, that flows into a heating channel;
- generating distillate from a feed by means of evaporation to vapour in a first liquid channel of a membrane distillation module, which vapour is removed through a membrane and subsequently condensed in a vapour channel, wherein heat transfer occurs from the vapour channel to any subsequent liquid channel, and wherein the evaporation of feed in the first liquid channel occurs upon heat transfer from the heating channel in which the vapour flow condenses:
   - repeatedly, in dependence of the number of distillation modules in use, transferring non-evaporated feed of the preceding membrane distillation module to a subsequent membrane distillation module, and generating distillate from vapour passed into a subsequent vapour channel, therewith transferring heat to an adjacent liquid channel, and
   - generating the distillate of the last membrane distillation module in a vapour channel of a condenser module against a cooling fluid running in a cooling channel of the condenser module, wherein the method further comprises the steps of:
   - supplying a multi-phase feed to the steam generator, which multi-phase feed comprises a liquid phase and a vapour phase as a mixture;
   - removing a mixture predominantly comprising vapour from the multi-phase feed, which mixture is further evaporated to generate the vapour flow, and
   - transferring the multi-phase feed remaining after the removal step to the first liquid channel for use as the feed.

In accordance with a second aspect of the invention, a membrane distillation system is provided according to claim 19, comprising:
- a steam generator provided with a feed entry, a feed channel from which in operation evaporated feed flows to a vapour channel comprising a condensation wall, against which it is condensed, so as to transfer heat to an adjacent liquid channel;
- at least one membrane distillation module comprising a feed entry, a liquid channel that is further provided with a fluid exit and a membrane through which evaporated liquid may pass, in use, into a vapor space coupled to a subsequent vapour channel for condensation so as to generate distillate and transfer heat to an adjacent liquid channel, and
- a condenser module for generating of distillate from evaporated liquid from a preceding, last membrane distillation module, comprising a vapour channel for receiving said evaporated liquid, a condensation wall, and a cooling channel through which, in use, a cooling liquid flows,
- means for applying an underpressure to at least one of the modules by means of an external vacuum means, which underpressure is forwarded to other modules by means of pressure communication,
wherein:
- the system further comprises feed pretreatment means for generating a multi-phase feed comprising a liquid phase and a vapour phase, which multi-phase feed is transmitted to the steam generator, and
- the steam generator further comprises subdivision means for removing a predominantly vapour stream flowing into the feed channel of the steam generator from the multi-phase feed,
which multi-phase feed is thereafter transferred to the feed entry of the first membrane distillation module.

It has been observed by the inventors that the provision of feed having a vapour phase significantly increased system performance, such as yield. It was found that the provision of a multi-phase feed may result in a distillate output that is twice the distillate output obtained when a standard, liquid feed is used. The system moreover could be operated in a stable manner. Moreover, the use of a steam riser circuit with recirculation of steam is not necessary.

The invention is based on the insight that the vapour phase of the multi-phase feed will increase surface area of the feed in the feed channel of the steam generator. The vapour does not remain within the multi-phase feed, but starts to flow away. This makes that significantly more evaporation occurs. The larger vapour flow results in a larger heat transfer to the first liquid channel, effectively boosting therein the evaporation. The vapour of the vapour phase thus acts as a catalyst. In this context, it is relevant that the multiphase feed is a continuous flow running through the steam generator, with a predefined residence time. Acceleration of the evaporation, probably due to a surface increase, but perhaps also due to the generation of convection through the evolving and growing vapour phase is herein very relevant.

Several ways may be used for generating the vapour flow, e.g. steam, in the steam generator. The temperature may be further increased, the pressure may be decreased, and a sufficient volume may be present, so that the vapour phase can easily flow out of the feed. It will be understood that these manners may be used in combination. Preferably, pressure reduction is used as a primary way for generating the vapour flow in the steam generator.
The feed remaining after the generation and separation of the vapour flow could be a multi-phase feed, but also a single phase feed.

In one further embodiment the steam generator comprises separation means and a heat transmission module. The separation means result in a separation of the multi-phase feed into a first stream primarily comprising vapour and a second stream primarily comprising liquid. The first stream is then transmitted to the heat transmission module, which is in contact with the first membrane distillation module. The second stream is transferred to the liquid channel of the first membrane distillation module. Additional steam is suitably generated in the heat transmission module, for instance by pressure reduction.

The multi-phase feed with a liquid phase and a vapour phase is typically a two-phase feed, though the presence or generation of any third phase is not principally excluded. More suitably, the liquid phase of the multiphase-feed is dominant. For instance, the multiphase feed may be in the form of a bubbling liquid. The extent of bubbling is suitably not too high, in order to ensure a sufficiently high density of the feed.

In one embodiment, the vapour phase constitutes at least 1vol% and at most 80vol% of the multi-phase feed. More preferably, the vapour phase constitutes from 3 to 50 vol%, more preferably from 5 to 25 vol% of the multiphase feed. Such relatively low amounts of vapour phase turn out to be sufficient for the increase of yield, and moreover ensure an adequate operation and control of means in which the multi-phase feed is generated, the steam generator, as well as any transport between both of them.

The multi-phase feed is suitably generated in a heat exchanger. It has turned out that the appearance and amount of the vapour phase depends on the specified feed flow and the amount of heat transferred into the feed. The setting of the feed flow is herein relevant in relation to the size of the heat exchanger, i.e. in order to allow generation of the more voluminous vapour. However, if the feed is already warm or hot as a consequence of its origin, a heat exchanger may not be needed, or may be of a design suitable for generating the multi-phase feed.

Generally, the membrane distillation process is carried out at an underpressure, wherein each subsequent distillation module is operated at a lower pressure. Thereto, an underpressue is applied to at least one of the modules in the system by means of an external vacuum means, and thereafter transferred to other modules by means of pressure communication. The setting of the pressure within the membrane distillation system goes by itself, in dependence of the applied temperature, and starting from the applied underpressure.

Suitably, also the multiphase feed is provided at an underpressure. This has the advantage that the boiling temperature decreases. Moreover, the decreased pressure results in a greater sensitivity of the feed. It is therefore believed that the pressure decrease results in acceleration of the steam generation.

Suitably the pretreatment of the invention results in a feed temperature of at least 70°C and a pressure of at most 0.5 bar. These are conditions under which the feed may be brought in a multiphase form, particularly a two-phase form. It will be apparent to the skilled person that optimum temperature and pressure for the feed depend on a number of variables, among which the feed flow magnitude, the concentration of the feed solution (and therewith its boiling temperature).

The steam generator may be embodied as a module with a membrane through which evaporated feed may pass into a vapor space coupled to the vapour channel. Such a membrane is deemed beneficial to maximize the available surface area. It will be understood that the membrane in the heat-transfer module does not need to be identical with respect to the membrane in the one or more distillation modules. For instance, pore size may be different. The distillate in the heating channel coupled to the steam generator is suitably added to the distillate output. Alternatively, this distillate may be recycled to the feed, for increasing system robustness. The membranes are typically hydrophobic. This provision of the steam generator as a module has the advantage that it may be assembled with the membrane distillation modules - at least one, typically between 2 and 8 - and the condenser module into a physically integrated and compact block. Such a block also allows a good maintenance of the heat.

Another advantage of the invention is the absence of a need for pre-filling the system for an appropriate start-up. This simplified start-up enables a much wider application range.

In a first embodiment, the feed may be provided from a source external to the system, wherein the source provides hot water. Such a hot water source is regularly available in industrial environments, for instance as used process water. Alternative hot water sources are for instance hot water springs and independently heated water, for instance through solar panels.

In a second embodiment, a source for the feed is the cooling water that has been warmed up during its passage through the condenser. This warmed-up cooling water is particularly a suitable source in case that the cooling water is brought to an underpressure before or in the course of its passage through the condenser. Such a situation occurs in a preferred embodiment of the invention, wherein the flow of cooling liquid is controlled by means of the pressure at the cooling liquid inlet of the condenser, and the pressure at the outlet of cooling liquid of the condenser. By generating an underpressure at the condenser cooling liquid outlet, cooling liquid can be sucked through the condenser from an atmospheric pressure source. The underpressure at the condenser outlet can for example be generated by using the underpressure in the distillate modules, or by applying a liquid pump.

More suitably, a feed flow sensor is present for sensing a feed flow at a location prior to its pretreatment. It was found that the sensing of the feed flow in advance of the pretreatment results in a more reliable sensing, due to the absence of any vapour phase. The sensed feed flow may then be used, as a key parameter, for system control. Thereto, a sensing signal is sent from the sensor to a system controller. On the basis of a control algorithm including for instance system data and calibration data, the system may then be controller. Other sensors suitably in use are for instance an output sensor, such as a level sensor for sensing the level in a distillate container and/or a level sensor for sensing the level in a brine container, a pressure sensor for sensing the pressure applied to the condenser and optionally a temperature sensor for sensing the temperature of the feed.

Alternatively, or additionally, if no such active feed control using a control algorithm is used, the feed flow sensor may be used as an indication that the system is running within the correct feed flow boundaries. A too high feed flow can prevent the feed from entering the two-phase condition, A too low feed flow could give crystallization problems in the system. The indication may then present for visual inspection by an operator, i.e. with any type of display.

In one implementation, pressure reduction in the pretreatment module comprises a valve system rather than a separate pump. One example is such a valve system is for instance a throttle valve, or somewhat more generic, a regulating pipe restriction, a metering device, such as a screw or piston or the like.

If the feed is heated with a heat exchanger as part of the pretreatment, the pressure decrease is suitably carried out prior to the said heat-exchange. It has turned out in preliminary experiments with the inventive system, that a reversed order includes a risk of converting the two-phase input into a vapour rather substantially. Such a full evaporation leads to an instable system, which is undesired.
Alternatively, if a hot water source is used for the feed, any risk of full evaporation may be reduced with the incorporation of a buffer, such as a feed reservoir after pressure decrease.

Suitably, the pretreatment module is provided with regulating means for regulating flow rate, temperature and/or pressure of the feed. More particularly, regulating means may be present for defining whether a multi-phase or a single phase feed is applied, as well as the relative rate of the vapour phase and the liquid phase. Such regulation of the flow rates of the phases allows to tune the distillate output of the system, in cases where a lower output is desired.

The membrane distillation system of the invention is most suitably a physically integrated system, in the sense that the steam generator module, the membrane distillation modules and the condenser are physically integrated. More preferably, use is made of a single frame that defines the various channels. The functions or condensation wall and membrane are therein defined by means of application of dedicated foils. Such a modular frame defining various channels, including a liquid channel, a pressure connection, an inert gas channel, a distillate channel is for instance known from WO-A 2010/127818, which is herein included by reference.

Rather than a single physically integrated modular assembly, a plurality of such assemblies may be present. This is particularly feasible in the context of the invention, as the volume of supplementary components such as vacuum pumps, recirculation lines of a steam riser circuit, siphons are no longer necessary. Instead, a plurality (for instance two or three or four) physically integrated modular assemblies may be stacked on top of each other. It will be understood that further components such as a pretreatment module and means for setting the underpressure may be common to a plurality of such assemblies.

The means for applying an underpressure to the condenser in the present invention suitably comprise a vacuum pump as well as any connections between such vacuum pump and the condenser module. The connections may extend to both the vapour channel and the cooling channel in the condenser module. Alternatives are envisageable, such as a connection to a pipe to or from the cooling channel rather than the cooling channel itself; a single connection to the condenser module with an appropriate pressure equilibration connection between vapour channel and cooling channel.

More preferably, the underpressure in the condenser is further applied, directly or indirectly to a vessel for collecting warmed-up cooling water. This vessel is in one implementation a brine vessel into which also the brine flows. For sake of clarity, the term 'brine' is used herein for the concentrated and non-evaporated feed after passing the distillation modules. Such an implementation has several advantages.

First, the coupling of the underpressure to this vessel creates a driving force, so that any warmed-up cooling liquid has a tendency to flow into the vessel. In one further embodiment, cooling liquid is driven through the condenser only the basis of a pressure difference between a cooling liquid inlet and the condenser. As a result, the cooling liquid will undergo a pressure reduction, but not so far as to the predefined underpressure. The vessel will then be at a lower pressure than the warmed up cooling liquid, resulting in a specific driving force.

Secondly, the use of a single vessel for brine and cooling liquid has the advantage of requiring one vessel less, which is suitable for minimizing size requirement. Moreover, the mixing of brine and cooling liquid reduces the brine concentration. This is suitable so as to improve corrosion resistance and simply pumping of the brine to atmospheric pressure.

Rather than a single distillate output, more than one output could be present, allowing different portions of the distillate to be collected separately. In a single distillate output, all distillate exits in the vapour channels are typically coupled to one distillate channel leading to a single distillate collector. In a system with a plurality of distillate output, more than one of such distillate channel and such distillate collector is present. Most suitably, a vapour channel has a single distillate exit to one of the distillate channels.

The system of the invention is suitably a small scale or medium scale system, and is for instance used for household applications for drinking water and the like. For household applications, a volume of water in drink water quality of 100 liter per day (1-10 liter per hour) may be sufficient. For larger applications, a throughput of 70 liters per hour is feasible, which may well be increased up to for instance 100-150 liter per hour.
The system suitably comprises rather conventional supplementary elements, such as vessels for storage, pumps for throughout of brine and distillate and filters and/or sieves for removal of particulates, biological organisms and the like.

Most suitably, the generated distillate is stored at reduced pressure, particularly a pressure lower than atmospheric pressure. The advantage of storage at reduced pressure is that risk of contamination of the distillate with bacteria and/or other microbiological contamination is reduced. Furthermore, such a system is preferably provided with reservoirs at different temperatures, so as to provide hot water for f.i. cooking, cold water for f.i. drinking and medium temperature water for f.i. washing, cleaning and the like. Such reservoirs with different temperatures are not merely beneficial for a user, but also, particularly in a hot and sunny environment, it tends to cost time to cool the distillate to a desired temperature. Hence, means and flows may be designed so as to ensure that water of a desired temperature is generated in a sufficient quantity. Thermostats for setting and controlling the desired temperature in a reservoir may be present.

### Brief introduction to the figures

These and other aspects of the invention will be further elucidated with reference to the figures, which are purely diagrammatical and not drawn to scale, and wherein:
Fig. 1 shows diagrammatically a general architecture in accordance with the prior art as shown in WO2005/089914 A1;
Fig. 2 shows a schematical view according to one embodiment of the invention;
Fig. 3 shows a view corresponding to that of Fig. 2, but indicating the pressure operation of the system;
Fig. 4 shows a more detailed schematical view specifying sensors and valves for one embodiment,
and
Fig. 5 shows a more detailed schematical view specifying sensors and valves for an alternative embodiment.

### Detailed description of illustrated embodiments

The Figures are not drawn to scale and are intended purely for illustrative purposes. Equal reference numerals in different figures refer to equal or corresponding parts.

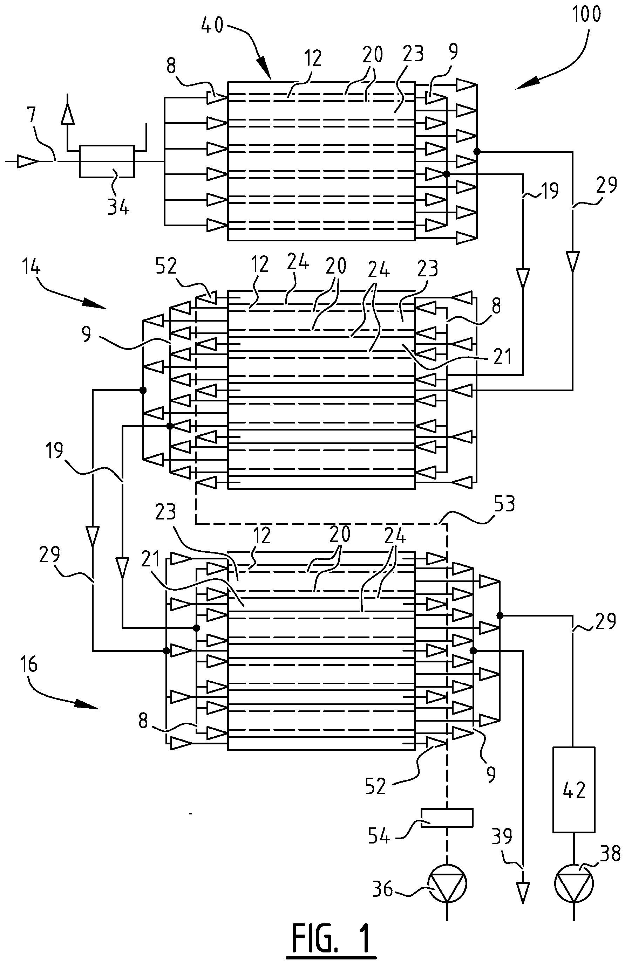

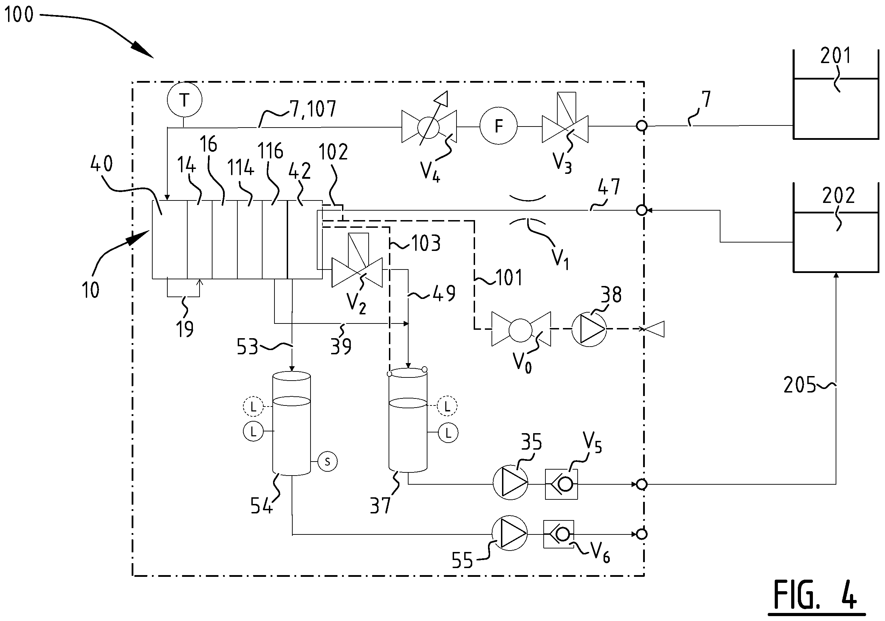

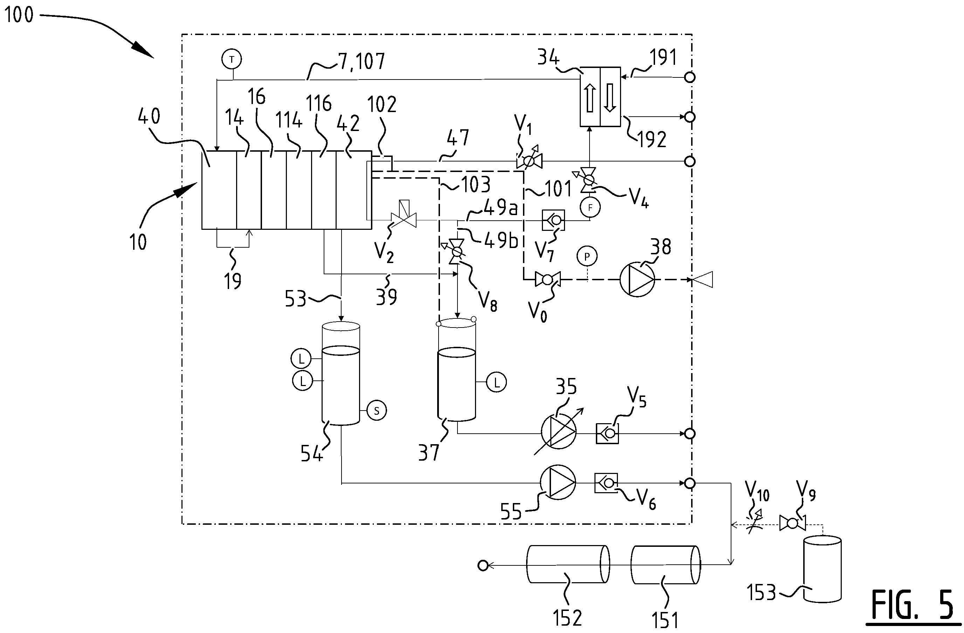

Fig. 1 shows diagrammatically a general architecture in accordance with the prior art as shown in WO2005/089914 A1. As shown herein, the membrane distillation system 100 comprises a vapor generator module 40, a first membrane distillation module 14, a second membrane distillation module 16 and a separate condenser 42 in the form of a heat exchanger, particularly so as to preheat the feed. As is indicated in the Fig. 4 and 5, the said modules 40, 14, 16, 42 are suitably physically integrated in a modular assembly 10. Cross-connections for pressure, distillate and connections between vapour channel and vapour spaces as well as between the liquid channels may be implemented herein. This integration is deemed beneficial so as to keep heat within the unit and to reduce pressure leakages as much as possible. Rather than a heat transfer module 40 suitable for integration into the modular system, any other heat transfer means could be used for the provision of heat in the form of condensable vapour, particularly steam.

Liquid, i.e. particularly an aqueous solution or a fluid mixture, enters the system via a liquid line 7. It is optionally preheated in a heat exchanger 34, but still at atmospheric pressure. Thereafter, it enters the steam generator module 40 at the fluid entry 8. Here the fluid runs in a liquid channel 12 and evaporates under the influence of the available heat, and subsequently leaves this vapor generator module 40 at the fluid exit 9 as a concentrated fluid. The fluid is thereafter led via a liquid connection 19 to the first membrane distillation module 14, which it enters at the fluid entry 8, runs through in liquid channel 12 and leaves at the fluid exit 9 as a further concentrated fluid. In order to ensure that distillation occurs, the pressure in the first membrane distillation module 14 is lower than that in the vapor generator module 40. Subsequently, the fluid is led through a liquid connection 19 to the second membrane distillation module 16, which it enters at the fluid entry 8, passes through liquid channel 12 and leaves through the fluid exit 9 as an even further concentrated fluid. This fluid is also known as brine and removed via brine exit 39. The brine is in fact present at atmospheric pressure, rather than at an underpressure.

Vapor is generated by means of distillation of the fluid. The vapor enters a vapor space 23 that is separated from the liquid channel 12 by means of substantially fluid-impermeable membranes 20. The substantially fluid-impermeable membranes 20 are particularly hydrophobic membranes. Evidently, if the fluid is non-aqueous but rather an organic liquid, the fluid-impermeable membranes will be chosen to be impermeable for said organic fluid. The generated vapor is led from the vapor space 23 to the vapour chamber of a subsequent module - in casu the first distillation module 14 - via vapour connection 29 and arrives in the vapour channel 21. The vapour channel 21 is provided with at least one condensation wall 24. The vapour will condensate at this condensation wall 24 and be converted into distillate. Simultaneously, heat generated in the condensation process is transferred to the liquid channel 12, which is located adjacent to the condensation wall 24. In the present embodiment, the vapour channel 21 is bound by two condensation walls 24 on opposite sides. While being advantageous, this is not strictly necessary.

Liquid evaporating from the liquid channel 12 in the first membrane distillation module 14 enters the vapor space 23 through said hydrophobic membranes 20, and flows through vapour connection 29 into the vapour channel 21 of the second membrane distillation module 16. Liquid evaporating from the liquid channel 12 in the last membrane distillation module - in this embodiment the second membrane distillation module 16 - enters the vapor space 23 through hydrophobic membranes 20, and flows through vapour connection 29 into the condenser unit 42. It is therein converted into liquid and thereafter brought to a desired pressure (typically a higher pressure) by means of pump 38 (typically a vacuum pump). Instead of being led away as a separate liquid stream, the condensate from the condenser 42 may be added to a distillate collector. Distillate is collected in a distillate collector 54, from which it is pumped to a higher pressure using a vacuum pump 36. The distillate collector 54 is coupled to the distillate exits 52 of the first and second membrane distillation modules 12, 14 via a (distillate) connection 53.

It is observed for sake of clarity, that the number of fluid channels 12 in parallel within one module 40, 14, 16 may be specified on the basis of the intended distillate volume. While the number of fluid channels 12 is the same in each module 40, 14, 16 of the present embodiment, this is not necessary. While the present embodiment shows a design wherein the vapour space 23 and the vapour channel 21 are mutually coupled through an external vapour connection 29, this is not necessary. Alternative embodiments are envisageable wherein the vapour space 23 and the vapour channel 21 are merged into a "vapour channel space". In such case, the vapour channel space is suitably bounded on one side by a membrane 20 and on the opposite side by a condensation wall 24.

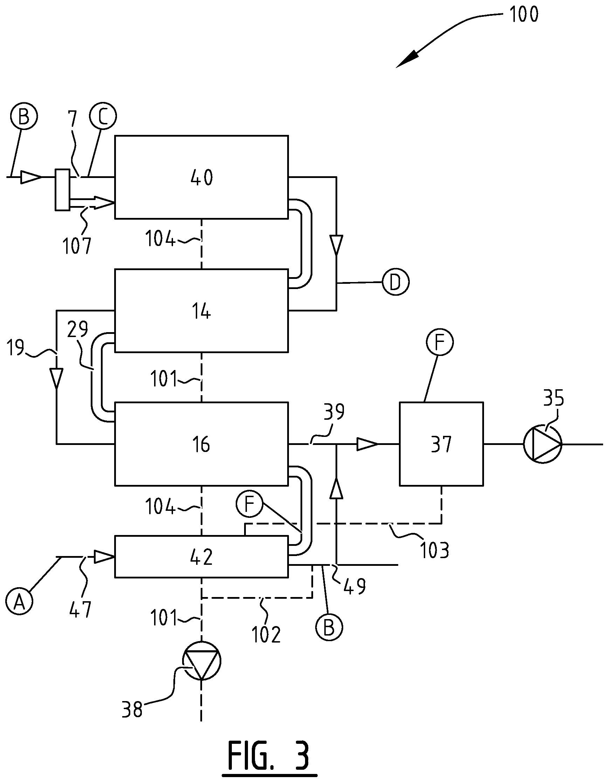

Fig. 2 and 3 show the general architecture in accordance with one embodiment of the present invention. Fig. 2 shows schematically the flows of liquid and vapour. Fig. 3 shows schematically the pressures in the system. For sake of clarity, details within the modules 40, 14, 16 are not shown, but are suitably corresponding to those shown in Figure 1. As shown in Fig 2, the system comprises a steam generator module 40, distillation modules 14, 16 and a condenser 42. All these modules are suitably physically integrated into a single assembly. The drawn lines 7, 19, 39, 47, 49 indicate substantially liquid flows. The liquid feed 7 goes through the modules 40, 14, 16 and liquid connections 19. It is finally converted into brine 39. The cooling liquid 47 passes the condenser 42 and is obtained as warmed up cooling liquid 49. This warmed up cooling liquid 49 is suitably divided into a first stream 49a that is merged with the brine 39, and a second stream 49b for other purposes, for instance use as a feed 7.

The dotted line 52, 53 indicate distillate flows. In this example architecture, the distillate flow 52 from the first distillation module 14 is merged with the distillate flow 53 from the second distillation module 16 and the condenser to arrive at a distillate collector 54. However, as shown in Fig. 4-5, the distillate flow (pipe) 52 may be integrated into the modular assembly, such that merely a single distillate exit 53 is present.

Furthermore vapour lines 107, 29 are shown. In accordance with the present invention, the feed 7 is pretreated in a pretreatment module 134 to obtain a multi-phase feed, i.e. a two-phase feed comprising a feed vapour 107 and a liquid feed 7. The feed vapour 107 and the liquid feed 7 are indicated separately in this Figure 2 for sake of clarity, but may physically be provided in a single pipe.

The architecture shown in Fig. 3 corresponds to that of Fig.2. For sake of clarity, the distillate channels 52, 53 are omitted. Fig. 3 intends to represent the pressure balance in one embodiment according to the invention. Particularly, the system 100 operates at underpressure. The pressure is defined with a limited number of pumps 35, 38. The pressures within the system 10 will be set during use. The pressure build up is controlled through a vacuum pump 38. This pump sets an underpressure F which is communicated through the system via lines 101-104. Line 101 communicates the pressure to the condenser 42, and particularly to the vapour channel 29 therein. Line 102 indicates the clamping vacuum (Dutch: klemvacuüm) of the system. This line 102 is a branch of the main line 101, wherein vacuum pressure is brought between the individual modules for clamping them together. Line 103 communicates the pressure from the condenser 42 to a brine collector vessel 37. A further pump 35 is coupled thereto as an output valve. A similar pump, not shown, will be coupled a distillate collector vessel. Line 104 communicates the pressure from the condenser 42 to other modules 40, 14, 16. This communications do not imply that the underpressure is identical everywhere in the system 100. An actual pressure is obtained as a dynamic equilibrium on the basis of temperature, actual amount of vapour in dependence of flow rate and evaporation rate plus condensation rate.

The membrane distillation processes resulting in evaporation of feed 7, 19 result in a pressure difference between each module 40, 14,16. The pressure E at the entrance of the second distillation module 16 is thus higher than the pressure F in the brine collector vessel 37. The pressure D at the entrance of the first distillation module 14 is again higher than the pressure E. The pressure C at the entrance of the steam generator module 40 is again higher. For instance, the pressure C is 0.4 bar, pressure D is 0.3 bar, pressure E is 0.2 bar and pressure F is 0.1 bar. In accordance with the invention, the feed is pretreated in a pretreatment module, so as to obtain a two-phase feed 7, 107. During this pretreatment, the feed is suitably reduced in pressure from pressure B to pressure C. Pressure B is for instance 0.7 bar. This pressure B is also available at the warmed up cooling liquid 49, notwithstanding the communicated low pressure F. In fact, atmospheric pressure A may exist at the inlet 47 of cooling liquid. The cooling liquid is then driven through the condenser on the basis of the existing pressure difference, in which process the pressure is significantly lowered relative to the inlet pressure A.
In the shown implementation, a throttle valve V1 is present, which lowers the Pressure B to a predefined maximum, for instance between 650 and 900 mbar, suitably in the range of 750-800 mbar. This maximum setting of the Pressure B reduces a risk of damage to any foils in the condenser, more particularly any polymer foils in the condenser that are used as a condensation wall. This damaging is a risk, since the unexpected pressure differences over the foils may arise in the course of starting up and/or in case of system interruptions or failures. It will be understood that the predefined maximum may depend on the foil type in use. Furthermore, if the condensation wall were made of steel, aluminum, or a heat-conducting ceramic, the provision of a predefined maximum is not deemed necessary.

Hence, the system of the shown embodiment of the present invention may be operated with a minimum number of pumps 35, 38. Surprisingly, the stability in the system can be properly controlled, and a high distillate output may be obtained. This high distillate output is deemed due to the combination of the underpressure in the system together with the provision of a two-phase feed 7, 107 that more effectively results in the creation of a vapour flow of sufficient magnitude through vapour connection 29 to the condensation wall in the first membrane distillation module 14.

Fig. 4 shows schematically a more detailed view of a system 100 according to one embodiment of the invention, with an emphasis on all valves and sensors. The shown embodiment relates to a system with a hot water vessel 201 and a cooling water vessel 202 that are external to the system. Such a situation is for instance foreseen for use in industrial environments, or in combination with cooling or heating facilities, such as solar panels and/or caves for water disposal.

According to the shown embodiment, the feed 7 is herein pretreated to lower its pressure by means of valve V4. Heating means may be added for bringing the feed 7 to the desired temperature. The feed then passes the membrane distillation assembly 10, comprising the steam generator module 40, the condenser 42 as well as a series of membrane distillation modules 14, 16, 114, 116. The number of membrane distillation modules 14, 16, 114, 116 is open for design and typically ranges from 1 to 8, preferably 3 to 6. The distillate is thereafter removed via distillate channel 53 into a distillate collector vessel 54. The brine is removed via brine channel 39 to brine collector vessel 37. The brine 39 is merged with warmed up cooling liquid 49 that has passed the condenser 42 and was fed into the system from cooling water vessel 202 via cooling liquid line 47. The brine collector vessel 37 and the distillate collector vessel 54 are each coupled to a pump 35, 55 for pressure increase and transport. The brine is thereafter recirculated back into cooling water vessel 202 via recirculation line 205. It will be understood that alternatives are envisageable.
For an appropriate operation, a plurality of valves is provided. Valve V0 is a manual valve added for inspection purposes, in case of any leakage of vacuum (so that the desired underpressure is not reached). With this valve V0, on may find out easily, whether the leakage occurs in the assembly 10 or is related to the vacuum pump 38.

Valve V1 is a protection valve. It is defined so as to set a maximum to a pressure difference over the condenser 42. Therewith, polymer foils in the condenser 42 acting as condensation walls between a vapour channel and a cooling channel are protected, so as to prevent tearing, aging and the like. Valve V1 is for instance embodied as a restriction device.

Valve V2 is a further protection device for the event of any current interruption. The valve V2 prevents inflow of brine into the condenser via vacuum line 103, when for instance pump 35 does not work and hence an overflow of the brine collector vessel 37 occurs. In such case of current interruption, valve V2 will close automatically, therewith preventing any overflow of the brine collector vessel 37. This valve V2 is arranged in the line for the warmed up cooling liquid, since the cooling liquid flow tends to be larger than the brine flow. Evidently, a similar valve may be arranged in the brine line 39, if necessary for the prevention of any overflow. A further valve may be arranged so as to prevent, at least substantially, the backwards flow of warmed up cooling liquid after turning the apparatus off.

Valve V3 serves a similar function for the feed line 7.

Valve V4 is a device for setting the underpressure in the feed line 7 and therewith creating a two-phase feed 7 + 107. Suitably, this valve V4 is implemented as a throttle valve, but alternatives such as a tap or valve are not excluded. The setting of valve V4 is suitably controlled through a controller (not shown), on the basis of the sensor signals obtained. Alternatively, use may be made of a manual one-time setting, so that the system always reaches the two-phase state if sufficient heat is available. The setting of this valve is not in need of further change after its initial setting. A reset of this valve is envisaged for the event that the system suffers from scaling or fouling, affecting the total feed inflow, and/or when less or more heat is available, and the system settings need to be different.

The flow sensor F is in a highly preferred implementation arranged upwards from the means for providing an underpressure, such as valve V4. If the flow sensor were placed downwards from the valve V4, vapour bubbles tend to make the sensing more complex or could result in an inappropriate sensing result. The latter is caused in that the creation of steam in the feed flow accelerates the mixture. Hence, a mass or volume measurement is no longer representative.

Valves V5 and V6 are used for preventing backwards flow due to the pressure difference, particularly after turning off the apparatus.

Fig. 5 shows a schematical view of another embodiment of the system 100 of the invention. According to this system, the part 49a of the warmed up cooling liquid 49 is recirculated into the feed 7. A further part 49b of the warmed-up cooling liquid 49 is combined with the brine 39 to the brine collector vessel 37. In this embodiment, the warmed up cooling liquid 49 is pretreated by means of valve V4 and a heat exchanger 34 to become a two-phase feed 7+107. The heat exchanger 34 is provided with a separate heating liquid inlet 191 and a heating liquid outlet 192. The heat exchanger 34 has a suitable total surface for heat transfer into the feed flow. If the total surface area is too low, it turns out difficult, if not impossible to generate a multiphase feed. If the total surface is too high, the effectiveness of the steam generator 40, and therewith the system performance is reduced.

Suitably the heat exchanger is connected to the steam generator with any pipe, such that the multi-phase feed can be transported in a stable manner, i.e. without reconversion into a liquid feed. Such stable transport is suitably achieved with a line of sufficient diameter, preferably isolated and without sudden curves that have an impact on flow.

In a preferred embodiment, the heat exchanger 34 is designed for an updraft feed flow. Herein the heat exchanger is installed in a vertical manner, at least substantially, such that the feed entry point is lower than the multiphase feed exit point. Preferably, such feed entry point is at or near the bottom, whereas the feed exit point is at or near the top. It is believed that the updraft flow has a positive effect on creation of the multiphase feed mixture, in that gravity counteracts the pressure gradient in the heat exchanger feed flow.

This configuration suitably includes two further valves. Valve V7 is a protection device so as to prevent backwards flow of warmed-up cooling liquid 49a after turning off the system, and/or in case of any current interruption.
Valve V8 is a device with which the flow rate ratio between the flows 49a and 49b can be set. This device is suitably controlled by a system controller on the basis of the sensor measurements in the course of operation. Evidently, a manual control may be used alternatively, wherein corrections are likely to be made only subsequent to an operation run.

Fig. 4 and 5 moreover both indicate sensors in the system, more particularly a flow sensor F, a temperature sensor T, a pressure sensor P, level sensors L and a salinity sensor S. These sensors allow investigation of appropriate product quality and control of system stability and operation.

Fig. 5 furthermore shows post treatment means. Herein, the distilled water is treated to obtain potable water. A carbon dioxide vessel 53 is present, from which carbon dioxide may be inserted in the system using valves V9, V10. Furthermore, a marble filter 151 and a UV lamp 152 are provided so as to obtain water that meets all quality standards. It will be understood that the shown post treatment is merely an example and may be left out or replaced with alternative post treatments. It is furthermore indicated that additional filters and check valves may be present in the system, which are known per se and have been left out for sake of clarity.

It is observed that the above mentioned valves are suitable for use for protection and control of the system, and are claimed as separate features of the present invention.

In preliminary experiments with a system as shown in Fig 5, a cooling liquid input of 15 liter per minute was used at atmospheric pressure. After passing the condenser, 20% thereof was recirculated to become feed 7. This feed was heated to 70 °C and its pressure was lowered to approximately 0.3 bar. As a result, 0,8 liter per minute of distillate was obtained. The system pressure applied through the vacuum pump was 75 mbar. A further increase of the distillate output to 70 liter per hour (1, 2 liter per minute) was obtained by means of optimization of the temperature and underpressure of the two-phase feed 7+107. Use was made of both potable water and sea water for test purposes, which led to virtually identical results with respect to stability and product output.

In one further embodiment, the feed channel and the vapour channel of the steam generator constitute a heat transmitter module that transmits heat that is supplied in the form of a flow of vapour and/or liquid to the adjacent distillation module. The heat transmitter module is separated from the distillation module with the condensation wall, at which vapour will condensate. The vapour and/or liquid are suitably water, such as distilled water, but could be another medium. The vapour, i.e. steam, may be generated locally, i.e. from hot liquid by means of pressure reduction and/or temperature increase. The vapour may alternatively be flowing into the heat transmitter module, and be generated in advance. Moreover, a combination of local steam generation and supply of steam is also feasible.

More particularly, the steam generator comprises a first subdivision means for removing a predominantly vapour stream from the multi-phase feed. This predominantly vapour stream is then provided to the heat transmitter module, wherein suitably additional steam is generated by lowering of the pressure. The remaining multi-phase feed, more concentrated in liquid and/or predominantly liquid flows into the first membrane distillation module.

Particularly in the preferable embodiment that use is made of an assembly of modules made of polymer material, such as polyethylene or polypropylene, and more suitably modules with foils attached to module frames, for instance by means of welding, it has been found beneficial to subdivide the two phase feed into a primarily liquid stream 7 and a primarily vapour stream 107 prior to entry of the heat transmitter module 40. This appears to increase lifetime of the frames and foils. The liquid stream 7 would then go directly into the first membrane distillation module 14 without passing the heat transmitter module 40. However, it has been found that the yield is also enhanced in this version as a consequence of the two phase feed. The two-phase mixture 7, 107 has a very turbulent flow, even considered wild. Even when applying a pre-separation step before entering the heat transmitter module 40, it was found that the steam is feasible to suck the water and therewith to accelerate the mixture. Moreover, there is sufficient water in the steam portion to ensure a very good heat transfer, and there is sufficient steam in the water left to accelerate the evaporation process in each of the membrane distillation modules.

As a result of the pre-separation step, the primarily liquid stream is a first two-phase mixture with suitably at least 80vol%, preferably at least 90vol%, more preferably about 95vol% water. This mixture will be led directly to the first membrane distillation module 14. The primarily vapour stream is a second two-phase mixture with suitably less than 10vol% liquid, more preferably at most 5vol% liquid or even at most 1vol% liquid. The liquid is more suitably an aqueous solution. The vapour will be substantially water or a mixture of water and a further low-boiling compound such as an alcohol. The pre-separation is suitably achieved on the basis of density, more particularly by means of gravity. This is for instance carried out by means of a Y-shape connector part, with an inlet for the two-phase mixture and a first upper outlet for the vapour stream and a second lower outlet for the liquid stream. The first upper outlet is coupled to the heat transmitter module, the second lower outlet is coupled to the first membrane distillation module. It will be understood that other connector parts could be used; however the Y-shape does not have the disadvantage of a sharp corner for at least one of the streams. This could have an impact on flow rate, pressure, heat dissipation.

While all of the Figures 2-5 show embodiments wherein the cooling liquid is driven through the condenser 42 on the basis of a pressure difference, this is a preferred feature that is not considered essential for the operation of the present invention. Alternatively, use could be made of a closed system with cooling liquid, and/or a separate pump could be added so that the cooling liquid is pushed or sucked through the condenser actively, rather than passively on the basis of an existing pressure difference.

Furthermore, while the embodiments show that the cooling liquid and the brine are merged to end up in the brine collector vessel, this is not deemed necessary. Two separate streams could be used alternatively. Moreover, while the distillate of any distillation module and the condenser is shown to be guided to a single distillate collector, two separate distillate collectors may be applied.

### Example 1

Experiments were carried out with a system comprising a steam-riser circuit as specified in WO2007/054311 and a system of the invention. Both systems were provided with four membrane distillation modules, a condenser module. Either a steam-riser module or a steam generator module was present. Both systems used the same heat-exchanger for the pretreatment, using a boiler for heating. In the reference system, this heat exchanger was used to provide heat into the water of the steam riser circuit. The water was returned into the steam-riser circuit upon condensation in the heating channel. Non-evaporated feed in the steam riser was returned to the heat exchanger. In the system of the invention, the heat exchanger was used to heat up the feed, which was split in the steam generator into a feed and a vapour flow. The distillate of the heating channel was added to the distillate. The modules were assembled in a physically integrated block. The individual modules were of identical design. It is observed that the reference system is an optimized system that as such is not shown in WO2007/054311.

The conditions in subsequent modules were based on a boiler temperature of 80 °C. The pressures and the temperatures in the membrane distillation modules were measured at the entry of the vapour space following said module. The temperature and pressure of the 4^{th} membrane distillation module were those of the vapour entering the condenser module. The pressure in the feed was measured at the feed entry. The pressure in the steam raiser or steam generator was measured in the heating channel. The temperatures of the feed and in the steam raiser were measured on the basis of the liquid rather than on the basis of a vapour flow. In the steam raiser both input and output temperature were measured.
The reference system used 2, 1 liters/minute of feed and 18,6 liters/minute of hot water in the steam riser circuit. The multi-phase feed flow was 2.1 liters/minute.

**Table 1 - performance of two systems**

| parameter | reference system | system according to the invention |
|---|---|---|
| input boiler temperature | 80°C | 79°C |
| thermal power put into the system | 13,4 kW | 13,8 kW |
| electrical power | 400W | 307W |
| distillate output per hour | 53 liter | 69 liter |
| relative conversion of feed | 40 vol% | 55 vol% |
| vacuum pressure applied via pump | 64 mbar | 71 mbar |
| cooling liquid | 24,9 liter/minute | 23,5 liter/minute |

**Table 2 - conditions (P,T) in modules within the systems**

| | reference system | | system according to the invention | |
|---|---|---|---|---|
| | P | T | P | T |
| feed | n.a. | 30 °C (estimate) | 293 mbar | 70.1 °C |
| steam raiser/generator input | n.a. | 79.2 °C | n.a. | 78.8 °C |
| steam raiser /generator , output | 260 mbar | 68.9 °C | 289 mbar | 70.1 °C |
| 1^{st} membrane distillation module | 202 mbar | 61.6 °C | n.a. | 65.1 °C |
| 2^{nd} membrane distillation module | 160 mbar | 56.2 °C | n.a. | 60.1 °C |
| 3^{rd} membrane distillation module | 119 mbar | 50.5 °C | n.a. | 56.1 °C |
| 4^{th} membrane distillation module | 71 mbar | 40.3 °C | 86 mbar | 44.3 °C |

**Table 3 - temperature and pressure changes in a distillation module relative to a preceding module**

| | reference system | system of the invention |
|---|---|---|
| | T | T |
| 1^{st} membrane distillation module | 7.3 °C | 5.0 °C |
| 2^{nd} membrane distillation module | 5.4 °C | 5.0 °C |
| 3^{rd} membrane distillation module | 5.7 °C | 4.0 °C |
| 4^{th} membrane distillation module | 10.2 °C | 11.8 °C |

Table 1 shows that the effective distillate production in the system of the invention was significantly higher than that of the reference system, with highly similar input conditions. A further relevant advantage of the system of the invention is that the system's vacuum pressure was increased. This is highly relevant, since it reduces energy consumption in the vacuum pump, and simplifies the pumping of distillate and brine to atmospheric pressures. This is illustrated in the resulting decrease in electric power consumption with approximately 25%.

Table 2 shows the pressures and temperatures for the different modules. It is apparent that the temperatures in the system of the invention are higher in each module. The pressure in the last module is also significantly higher. Rather than simplifying pumping and lowering energy consumption, this higher pressures and temperatures could be exploited by adding a further distillation module, or optimizing the design in another manner, so as to increase the yield. These results surprisingly indicate that the use of a dedicated and large steam raiser flow does not turn out beneficial for the heat transfer. The preheating of the feed, and use thereof as a source of steam and as a feed turns out to be better.

Table 3 shows the temperature changes for the distillation modules. This demonstrates even more clearly the beneficial effect of the present invention. The decrease in temperature over from the steam raiser/generator to the first distillation module has decreased with 2.3 °C. The decrease in temperature over the following distillation modules is again reduced in the invention relative to the reference system. Apparently, the evaporation process in these subsequent modules is still more efficient in the invention than in the reference system. The inventors believe this the result of a two-phase feed in such further modules, leading to a more efficient evaporation process. Merely the decrease over the fourth module is surprisingly high, which may be an artefact of the prototype and be optimized further. The reduced temperature decrease implies a more efficient heat transfer.

### Example 2

Experiments were carried out with the system of the invention in that the pretreatment conditions to the feed were varied. The heat exchanger was set to a temperature in the range of 75-85°C, for instance 80 °C. Thereafter, the feed flow was varied. When increasing the feed flow from 2.1 liter/minute, for instance to 3 liter/minute, the amount of vapour in the two-phase feed mixture was reduced, up to a limit wherein a one-phase feed was obtained. The distillate production decreased to 40 liters per hour for a one-phase feed.

In short, the invention uses a two-phase feed for use as a heating source and a feed source. The two-phase feed accelerates and therewith increases the steam generation and the heat transfer to the first distillation module. A primarily liquid feed is transferred from the steam generator into the first membrane distillation module to act as feed.

## Claims

1. A membrane distillation process carried out in a system (100) comprising a plurality of modules, which method comprises the steps of:
- applying an underpressure to at least one of the modules of the system (100), which underpressure is forwarded to other modules through pressure communication;
- generating a vapour flow in a steam generator (40), that flows into a heating channel;
- generating distillate from a feed by means of evaporation to vapour in a first liquid channel (12) of a membrane distillation module (14, 16), which vapour is removed through a membrane (20) and subsequently condensed in a vapour channel (21), wherein heat transfer occurs from the vapour channel (21) to any subsequent liquid channel (12), and wherein the evaporation of feed in the first liquid channel (12) occurs upon heat transfer from the heating channel in which the vapour flow condenses:
- repeatedly, in dependence of the number of distillation modules (14, 16) in use, transferring non-evaporated feed of the preceding membrane distillation module (14, 16) to a subsequent membrane distillation module (14, 16), and generating distillate from vapour passed into a subsequent vapour channel (21), therewith transferring heat to an adjacent liquid channel (12), and
- generating the distillate of the last membrane distillation module (16) in a vapour channel (29) of a condenser module (42) against a cooling fluid running in a cooling channel of the condenser module (42),
**characterized in that** the method further comprises the steps of:
- supplying a multi-phase feed to the steam generator (40), which multi-phase feed comprises a liquid phase and a vapour phase as a mixture;
- removing a mixture predominantly comprising vapour from the multi-phase feed, which mixture is further evaporated to generate the vapour flow, and
- transferring the multi-phase feed remaining after the removal step to the first liquid channel (12) for use as the feed.

2. The membrane distillation process as claimed in claim 1, wherein the mixture predominantly comprising vapour is removed, in that the multi-phase feed is subdivided into a predominantly vapour stream from which the vapour flow is generated, and into a primarily liquid stream.

3. The membrane distillation process as claimed in Claim 2, wherein the primarily liquid stream is a two-phase mixture comprising at least 80vol% liquid.

4. The membrane distillation process as claimed in any of the Claims 1-3, wherein the predominantly vapour stream is a two-phase mixture with less than 10vol% liquid.

5. The membrane distillation process as claimed in any of the claims 2-4, wherein the subdivision is achieved on the basis of density.

6. The membrane distillation process as claimed in any of the claims 2-5, wherein the multi-phase feed is provided at an underpressure, suitably at a pressure of at most 0.5 bar and a feed temperature of at least 70°C.

7. The membrane distillation process as-claimed in any of the preceding claims, wherein the condensed vapour flow in the heating channel is added to the distillate.

8. The membrane distillation process as claimed in any of the preceding claims, wherein the multi-phase feed is in the form of a bubbling liquid.

9. The membrane distillation process as claimed in any of the preceding claims, wherein the multi-phase feed comprises at least 1 vol% of vapour phase, and at most about 80 vol%.

10. The membrane distillation process as claimed in Claim 9, wherein the multi-phase feed comprises between 2 and 50 vol% vapour phase, more preferably between 5 and 25 vol% vapour phase.

11. The membrane distillation process as claimed in any of the preceding claims, further comprising the step of heating a feed flow in a heat exchanger (34) for conversion into the multi-phase feed.

12. The membrane distillation process as claimed in Claim 11, wherein the multi-phase feed is heated to a feed temperature of at least 60°C, more preferably at least 70 °C.

13. The membrane distillation process as claimed in any of the preceding claims, wherein the vapour flow is generated in the steam generator (40) through pressure reduction.

14. The membrane distillation process as claimed in any of the preceding claims, wherein the cooling liquid is driven through the condenser (42) by means of a pressure difference between an entry of the cooling liquid and the outlet of the condenser (42).

15. The membrane distillation process as claimed in any of the preceding claims, wherein any non-evaporated and concentrated feed is transferred to a low-pressure brine reservoir, and wherein furthermore at least part of the cooling liquid is transferred into the brine reservoir after passing the cooling channel (29) of the condenser (42).

16. The membrane distillation process as claimed in any of the preceding claims, wherein at least part of the warmed up cooling liquid that has passed the condenser (42), is used as a source for the feed.

17. The membrane distillation process as claimed in Claim 16, wherein the warmed up cooling liquid is first brought to a lower pressure and thereafter heated up to a predefined feed temperature.

18. The membrane distillation process as claimed in any of the claims 15-17, wherein the feed flow is controlled by means of a regulating means defining a flow of warmed up cooling liquid into a waste reservoir, wherein the waste reservoir is kept at a lower pressure than the warmed up cooling liquid.

19. A membrane distillation system (100) comprising:
- a steam generator (40) provided with a feed entry (8), a feed channel (12) from which in operation evaporated feed flows to a vapour channel (21) comprising a condensation wall (24), against which it is condensed, so as to transfer heat to an adjacent liquid channel (12);
- at least one membrane distillation module (14, 16) comprising a feed entry (8), a liquid channel (12) that is further provided with a fluid exit (9) and a membrane (20) through which evaporated liquid may pass, in use, into a vapor space (23) coupled to a subsequent vapour channel (21) for condensation so as to generate distillate and transfer heat to an adjacent liquid channel (12), and
- a condenser module (42) for generating of distillate from evaporated liquid from a preceding, last membrane distillation module (16), comprising a vapour channel (29) for receiving said evaporated liquid, a condensation wall, and a cooling channel through which, in use, a cooling liquid flows,
- means for applying an underpressure to at least one of the modules by means of an external vacuum means (35, 38), which underpressure is forwarded to other modules by means of pressure communication,
**characterized in that**
- the system (100) further comprises feed pretreatment means for generating a multi-phase feed comprising a liquid phase and a vapour phase, which multi-phase feed is transmitted to the steam generator (40), and
- the steam generator (40) further comprises subdivision means for removing a predominantly vapour stream flowing into the feed channel (12) of the steam generator (40) from the multi-phase feed, which multi-phase feed is thereafter transferred to the feed entry (8) of the first membrane distillation module (14).

20. The membrane distillation system (100) as claimed in claim 19, wherein the pretreatment means comprises a heat exchanger (34).

21. The membrane distillation system (100) as claimed in Claim 19 or 20, further comprising a feed flow sensor (F) for sensing feed flow prior to a pressure reduction (V₄), and a system operation control operating in response to sense signals from said feed flow sensor (F).

22. The membrane distillation system (100) as claimed in Claim 21, further comprising a sensor for sensing a system output.

23. The membrane distillation system (100) as claimed in any of the claims 19 to 21, further comprising circulation means for transport of the warmed up cooling liquid after passing the condenser (42), so that at least part of the warmed up cooling liquid is used as a source for the feed.

24. The membrane distillation system (100) as claimed in any of the claims 19 to 23, wherein the modules are integrated into a physically integrated block.

## Patentansprüche

1. Membrandestillationsprozess, der in einem System (100) ausgeführt wird, das eine Mehrzahl von Modulen umfasst, wobei das Verfahren die Schritte umfasst, dass:
- ein Unterdruck auf zumindest eines der Module des Systems (100) aufgebracht wird, wobei der Unterdruck durch Druckkommunikation zu anderen Modulen geliefert wird;
- eine Dampfströmung in einem Dampfgenerator (40) erzeugt wird, die in einen Heizkanal strömt;
- Destillat von einer Zufuhr mittels Verdampfung zu Dampf in einem ersten Flüssigkeitskanal (12) eines Membrandestillationsmoduls (14, 16) erzeugt wird, wobei der Dampf durch eine Membran (20) entfernt und anschließend in einem Dampfkanal (21) kondensiert wird, wobei eine Wärmeübertragung von dem Dampfkanal (21) zu einem nachfolgenden Flüssigkeitskanal (12) stattfindet, und wobei die Verdampfung der Zufuhr in dem ersten Flüssigkeitskanal (12) bei Wärmeübertragung von dem Heizkanal auftritt, in welchem die Dampfströmung kondensiert;
- in Abhängigkeit der Anzahl von Destillationsmodulen (14, 16) im Gebrauch wiederholt nicht verdampfte Zufuhr des vorausgehenden Membrandestillationsmoduls (14, 16) an ein nachfolgendes Membrandestillationsmodul (14, 16) übertragen wird und Destillat von Dampf erzeugt wird, der in einen nachfolgenden Dampfkanal (21) gelangt ist, wodurch Wärme an einen benachbarten Flüssigkeitskanal (12) übertragen wird, und
- das Destillat des letzten Membrandestillationsmoduls (16) in einem Dampfkanal (29) eines Destillationsmoduls (42) gegen ein Kühlfluid erzeugt wird, das in einem Kühlkanal des Kondensatormoduls (42) strömt,
**dadurch gekennzeichnet, dass** das Verfahren ferner die Schritte umfasst, dass:
- eine mehrphasige Zufuhr einem Dampfgenerator (40) zugeführt wird, wobei die mehrphasige Zufuhr eine flüssige Phase und eine dampfförmige Phase als ein Gemisch umfasst;
- ein Gemisch, das vorwiegend Dampf umfasst, von der mehrphasigen Zufuhr entfernt wird, wobei das Gemisch ferner verdampft wird, um die Dampfströmung zu erzeugen, und
- die mehrphasige Zufuhr, die nach dem Entfernungsschritt verbleibt, an den ersten Flüssigkeitskanal (12) zur Verwendung als die Zufuhr übertragen wird.

2. Membrandestillationsprozess nach Anspruch 1, wobei das Gemisch, das vorwiegend Dampf umfasst, entfernt wird, so dass die mehrphasige Zufuhr in einen vorwiegend dampfförmigen Strom, von dem die Dampfströmung erzeugt wird, und in einen hauptsächlich flüssigen Strom unterteilt wird.

3. Membrandestillationsprozess nach Anspruch 2, wobei der hauptsächlich flüssige Strom ein Zweiphasengemisch ist, das zumindest 80 Vol.-% Flüssigkeit umfasst.

4. Membrandestillationsprozess nach einem der Ansprüche 1 - 3, wobei der vorwiegend dampfförmige Strom ein Zweiphasengemisch mit weniger als 10 Vol.-% Flüssigkeit ist.

5. Membrandestillationsprozess nach einem der Ansprüche 2 - 4, wobei die Unterteilung auf der Basis der Dichte erreicht wird.

6. Membrandestillationsprozess nach einem der Ansprüche 2 - 5, wobei die mehrphasige Zufuhr bei einem Unterdruck, geeigneterweise bei einem Druck von höchstens 0,5 bar und einer Zufuhrtemperatur von zumindest 70°C bereitgestellt wird.

7. Membrandestillationsprozess nach einem der vorhergehenden Ansprüche, wobei die kondensierte Dampfströmung in dem Heizkanal dem Destillat hinzugefügt wird.

8. Membrandestillationsprozess nach einem der vorhergehenden Ansprüche, wobei die mehrphasige Zufuhr in der Form einer Blasenflüssigkeit vorliegt.

9. Membrandestillationsprozess nach einem der vorhergehenden Ansprüche, wobei die mehrphasige Zufuhr zumindest 1 Vol.-% Dampfphase und höchstens etwa 80 Vol.-% umfasst.

10. Membrandestillationsprozess nach Anspruch 9, wobei die mehrphasige Zufuhr zwischen 2 und 50 Vol.-% Dampfphase, bevorzugter zwischen 5 und 25 Vol.-% Dampfphase umfasst.

11. Membrandestillationsprozess nach einem der vorhergehenden Ansprüche, ferner mit dem Schritt zum Erwärmen einer Zufuhrströmung in einem Wärmetauscher (34) zur Umwandlung in die mehrphasige Zufuhr.

12. Membrandestillationsprozess nach Anspruch 11, wobei die mehrphasige Zufuhr auf eine Zufuhrtemperatur von zumindest 60°C, bevorzugter zumindest 70°C erhitzt wird.

13. Membrandestillationsprozess nach einem der vorhergehenden Ansprüche, wobei die Dampfströmung in dem Dampfgenerator (40) durch Druckreduzierung erzeugt wird.

14. Membrandestillationsprozess nach einem der vorhergehenden Ansprüche, wobei die Kühlflüssigkeit durch den Kondensator (42) mittels einer Druckdifferenz zwischen einem Eintritt der Kühlflüssigkeit und dem Auslass des Kondensators (42) getrieben wird.

15. Membrandestillationsprozess nach einem der vorhergehenden Ansprüche, wobei eine nicht verdampfte und konzentrierte Zufuhr zu einem Niederdruck-Solenreservoir übertragen wird, und wobei ferner zumindest ein Teil der Kühlflüssigkeit in das Solenreservoir nach Durchgang durch den Kühlkanal (29) des Kondensators (42) übertragen wird.

16. Membrandestillationsprozess nach einem der vorhergehenden Ansprüche, wobei zumindest ein Teil der aufgewärmten Kühlflüssigkeit, die den Kondensator (42) durchströmt hat, als eine Quelle für die Zufuhr verwendet ist.

17. Membrandestillationsprozess nach Anspruch 16, wobei die erwärmte Kühlflüssigkeit zuerst auf einen geringeren Druck gebracht wird und anschließend auf eine vordefinierte Zufuhrtemperatur erhitzt wird.

18. Membrandestillationsprozess nach einem der Ansprüche 15 - 17, wobei die Zufuhrströmung mittels eines Regulierungsmittels gesteuert wird, das eine Strömung von erwärmter Kühlflüssigkeit in ein Abfallreservoir definiert, wobei das Abfallreservoir bei einem geringeren Druck gehalten wird, als die erwärmte Kühlflüssigkeit.

19. Membrandestillationssystem (100), umfassend:
- einen Dampfgenerator (40), der mit einem Zufuhreinlass (8) und einem Zufuhrkanal (12) versehen ist, von dem im Betrieb verdampfte Zufuhr zu einem Dampfkanal (21) strömt, der eine Kondensationswand (24) umfasst, gegen die er kondensiert wird, um so Wärme an einen benachbarten Flüssigkeitskanal (12) zu übertragen;
- zumindest ein Membrandestillationsmodul (14, 16), das einen Zufuhreinlass (8), einen Flüssigkeitskanal (12), der ferner mit einem Fluidausgang (9) versehen ist, und eine Membran (20) umfasst, durch die verdampfte Flüssigkeit im Gebrauch in einen Dampfraum (23) gelangen kann, der mit einem nachfolgenden Dampfkanal (21) zur Kondensation gekoppelt ist, um so Destillat zu erzeugen und Wärme an einen benachbarten Flüssigkeitskanal (12) zu übertragen, und
- ein Kondensatormodul (42) zum Erzeugen von Destillat aus verdampfter Flüssigkeit von einem vorhergehenden letzten Membrandestillationsmodul (16), das einen Dampfkanal (29) zur Aufnahme der verdampften Flüssigkeit, eine Kondensationswand und einen Kühlkanal umfasst, durch den im Gebrauch eine Kühlflüssigkeit strömt,
- ein Mittel zum Aufbringen eines Unterdrucks auf zumindest eines der Module mittels eines externen Vakuummittels (35, 38), wobei der Unterdruck zu anderen Modulen mittels einer Druckkommunikation geliefert wird,
**dadurch gekennzeichnet, dass**
- das System (100) ferner ein Zufuhrvorbehandlungsmittel zum Erzeugen einer mehrphasigen zufuhr umfasst, die eine flüssige Phase und eine Dampfphase umfasst, wobei die mehrphasige Zufuhr an den Dampfgenerator (40) übertragen wird, und
- der Dampfgenerator (40) ferner ein Unterteilungsmittel zum Entfernen eines vorwiegend dampfförmigen Stromes, der in den Zufuhrkanal (12) des Dampfgenerators (40) strömt, von der mehrphasigen Zufuhr umfasst, wobei die mehrphasige Zufuhr anschließend an den Zufuhreingang (8) des ersten Membrandestillationsmoduls (14) übertragen wird.

20. Membrandestillationssystem (100) nach Anspruch 19, wobei das Vorbehandlungsmittel einen Wärmetauscher (34) umfasst.

21. Membrandestillationssystem (100) nach einem der Ansprüche 19 oder 20, ferner mit einem Zufuhrströmungssensor (F) zum Erfassen einer Zufuhrströmung vor einer Druckreduzierung (V₄) und einer Systembetriebssteuerung, die in Ansprechen auf das Erfassen von Signalen von dem Zufuhrströmungssensor (F) arbeitet.

22. Membrandestillationssystem (100) nach Anspruch 21, ferner mit einem Sensor zum Erfassen eines Systemausgangs.

23. Membrandestillationssystem (100) nach einem der Ansprüche 19 bis 21, ferner mit einem Zirkulationsmittel zum Transport der erwärmten Kühlflüssigkeit nach Durchgang durch den Kondensator (42), so dass zumindest ein Teil der erwärmten Kühlflüssigkeit als eine Quelle für die Zufuhr verwendet ist.

24. Membrandestillationssystem (100) nach einem der Ansprüche 19 bis 23, wobei die Module in einen physisch integrierten Block integriert sind.

## Revendications

1. Processus de distillation à membrane effectué dans un système (100) comprenant une pluralité de modules, ledit procédé comprenant les étapes consistant à :
- appliquer une dépression à l'un au moins des modules du système (100), ladite dépression étant transmise à d'autres modules par communication de pression ;
- générer un flux de vapeur dans un générateur de vapeur (40), qui s'écoule dans un canal de chauffage ;
- générer un distillat depuis un produit alimenté au moyen d'une évaporation en donnant une vapeur dans un premier canal à liquide (12) d'un module de distillation à membrane (14, 16), ladite vapeur étant supprimée via une membrane (20) et ultérieurement amenée à condenser dans un canal à vapeur (21), dans lequel un transfert de chaleur se produit depuis le canal à vapeur (21) vers un quelconque canal à liquide ultérieur (12), et dans lequel l'évaporation du produit alimenté dans le premier canal à liquide (12) se produit lors du transfert de chaleur depuis le canal de chauffage dans lequel le flux de vapeur est condensé :
- transférer, en dépendance du nombre de modules de distillation (14, 16) en utilisation, de façon répétée le produit alimenté non-évaporé du module de distillation à membrane précédent (14, 16) vers un module de distillation à membrane ultérieur (14, 16), et générer un distillat depuis la vapeur qui est passée dans un canal à vapeur ultérieur (21), en transférant avec celui-ci de la chaleur vers un canal à liquide adjacent (12), et
- générer le distillat du dernier module de distillation à membrane (16) dans un canal à vapeur (29) d'un module condenseur (42) à l'encontre d'un fluide de refroidissement ce qui circule dans un canal de refroidissement du module condenseur (42),
**caractérisé en ce que** le procédé comprend en outre les étapes consistant à :
- alimenter un produit alimenté multi-phase vers le générateur de vapeur (40), ledit produit alimenté multi-phase comprenant une phase liquide et une phase vapeur sous forme de mélange ;
- supprimer un mélange qui comprend de façon prédominante de la vapeur hors du produit alimenté multi-phase, ledit mélange étant en outre évaporé pour générer le flux de vapeur, et
- transférer le produit alimenté multi-phase restant après l'étape de suppression vers le premier canal à liquide (12) pour être utilisé à titre de produit alimenté.

2. Processus de distillation à membrane selon la revendication 1, dans lequel le mélange qui comprend de façon prédominante de la vapeur est supprimé du fait que le produit alimenté multi-phase est subdivisé en un courant incluant de façon prédominante de la vapeur, depuis lequel le flux de vapeur est généré, et en un courant constitué de façon primaire de liquide.

3. Processus de distillation à membrane selon la revendication 2, dans lequel le courant constitué de façon primaire de liquide est un mélange à deux phases comprenant au moins 80 % en volume de liquide.

4. Processus de distillation à membrane selon l'une quelconque des revendications 1 à 3, dans lequel le courant incluant de façon prédominante de la vapeur est un mélange à deux phases avec moins de 10 % en volume de liquide.

5. Processus de distillation à membrane selon l'une quelconque des revendications 2 à 4, dans lequel la subdivision est assurée sur la base de la densité.

6. Processus de distillation à membrane selon l'une quelconque des revendications 2 à 5, dans lequel le produit alimenté multi-phase est fourni avec une dépression, de façon appropriée à une pression au maximum de 0,5 bars et une température d'alimentation d'au moins 70°C.

7. Processus de distillation à membrane selon l'une quelconque des revendications précédentes, dans lequel le flux de vapeur condensée dans le canal de chauffage est ajouté au distillat.

8. Processus de distillation à membrane selon l'une quelconque des revendications précédentes, dans lequel le produit alimenté multi-phase est sous la forme d'un liquide en bulles.

9. Processus de distillation à membrane selon l'une quelconque des revendications précédentes, dans lequel le produit alimenté multi-phase comprend au moins 1 % en volume de phase vapeur, et au plus environ 80 % en volume.

10. Processus de distillation à membrane selon la revendication 9, dans lequel le produit alimenté multi-phase comprend entre 2 et 50 % en volume de phase vapeur, et de façon plus préférée entre 5 et 25 % en volume de phase vapeur.

11. Processus de distillation à membrane selon l'une quelconque des revendications précédentes, comprenant en outre l'étape consistant à chauffer un flux de produit alimenté dans un échangeur de chaleur (34) pour sa conversion en donnant le produit alimenté multi-phase.

12. Processus de distillation à membrane selon la revendication 11, dans lequel le produit alimenté multi-phase est chauffé à une température d'alimentation d'au moins 60° C, de façon plus préférée d'au moins 70° C.

13. Processus de distillation à membrane selon l'une quelconque des revendications précédentes, dans lequel le flux de vapeur est généré dans le générateur de vapeur (40) par réduction de pression.

14. Processus de distillation à membrane selon l'une quelconque des revendications précédentes, dans lequel le liquide de refroidissement est entraîné à travers le condenseur (42) au moyen d'une différence de pression entre une entrée du liquide de refroidissement et la sortie du condenseur (42).

15. Processus de distillation à membrane selon l'une quelconque des revendications précédentes, dans lequel tout le produit alimenté non-évaporé et concentré est transféré vers un réservoir de saumure à basse pression, et dans lequel au moins une partie du liquide de refroidissement est en outre transféré vers le réservoir de saumure après être passé par le canal de refroidissement (29) du condenseur (42).

16. Processus de distillation à membrane selon l'une quelconque des revendications précédentes, dans lequel au moins une partie du liquide de refroidissement réchauffé qui est passé par le condenseur (42) est utilisé à titre de source pour le produit alimenté.

17. Processus de distillation à membrane selon la revendication 16, dans lequel le liquide de refroidissement réchauffé est d'abord amené à une pression plus basse et ensuite chauffé jusqu'à une température d'alimentation prédéfinie.

18. Processus de distillation à membrane selon l'une quelconque des revendications 15 à 17, dans lequel le flux alimenté est commandé au moyen d'un moyen de régulation définissant un flux de liquide de refroidissement réchauffé vers un réservoir de rejet, dans lequel le réservoir de rejet est maintenu à une température plus basse que le liquide de refroidissement réchauffé.

19. Système de distillation à membrane (100) comprenant :
- un générateur de vapeur (40) doté d'une entrée d'alimentation (8), d'un canal d'alimentation (12) depuis lequel un produit alimenté évaporé s'écoule en fonctionnement vers un canal à vapeur (21) comprenant une paroi de condensation (24), contre laquelle il est condensé, de manière à transférer de la chaleur vers un canal à liquide adjacent (12) ;
- au moins un module de distillation à membrane (14, 16) comprenant une entrée d'alimentation (8), un canal à liquide (12) qui est en outre dotée d'une sortie de fluide (9), et une membrane (20) à travers laquelle peut passer le liquide évaporé, en utilisation, vers un espace à vapeur (23) couplé à un canal à vapeur ultérieur (21) pour sa condensation de manière à générer un distillat et transférer de la chaleur vers un canal à liquide adjacent (12), et
- un module condenseur (42) pour générer un distillat à partir du liquide évaporé depuis un dernier module de distillation à membrane précédent (16), comprenant un canal à vapeur (29) pour recevoir ledit liquide évaporé, une paroi de condensation, et un canal de refroidissement à travers lequel un liquide de refroidissement s'écoule en utilisation,
- des moyens pour appliquer une dépression à l'un au moins des modules au moyen d'un dispositif à vide externe (35, 38), ladite dépression étant transmise à d'autres modules au moyen d'une communication de pression,
**caractérisé en ce que**
- le système (100) comprend en outre un moyen de prétraitement de produit alimenté pour générer un produit alimenté multi-phase comprenant une phase liquide et une phase vapeur, ledit produit alimenté multi-phase étant transmis au générateur de vapeur (40), et
- le générateur de vapeur (40) comprend en outre un moyen de subdivision pour supprimer un courant comprenant de façon prédominante de la vapeur s'écoulant dans le canal d'alimentation (12) du générateur de vapeur (40) hors du produit alimenté multi-phase, et ledit produit alimenté multi-phase est ensuite transféré vers l'entrée d'alimentation (8) du premier module de distillation à membrane (14).

20. Système de distillation à membrane (100) selon la revendication 19, dans lequel le moyen de prétraitement comprend un échangeur de chaleur (34).

21. Système de distillation à membrane (100) selon la revendication 19 ou 20, comprenant en outre un capteur de flux d'alimentation (F) pour détecter le flux d'alimentation avant une réduction de pression (V₄), et un système de commande de fonctionnement qui fonctionne en réponse à des signaux de détection provenant dudit capteur de flux d'alimentation (F).

22. Système de distillation à membrane (100) selon la revendication 21, comprenant en outre un capteur pour détecter une sortie du système.

23. Système de distillation à membrane (100) selon l'une quelconque des revendications 19 à 21, comprenant en outre un moyen de circulation pour le transport du liquide de refroidissement réchauffé après avoir passé le condenseur (42), de sorte qu'au moins une partie du liquide de refroidissement réchauffé est utilisée à titre de source pour le produit alimenté.

24. Système de distillation à membrane (100) selon l'une quelconque des revendications 19 à 23, dans lequel les modules sont intégrés dans un bloc physiquement intégré.
